# EUROPEAN PATENT APPLICATION

(11) **EP 1 114 978 A1**
(43) Date of publication of application: **11.07.2001**
(21) Application number: 00300037.9
(22) Date of filing: 06.01.2000
(51) Int. Cl.: G01B 3/16, G01C 19/04

(54) **Three-dimensional homologous surveying method and the related instrument**

(71) Applicant: Lee, Chiu-Shan, Hsintien City, Taipei County (TW)
(72) Inventor: Lee, Chiu-Shan, Hsintien City, Taipei County (TW)
(74) Representative: Alexander, Thomas Bruce

(57) **Abstract**

A three-dimensional homologous surveying instrument includes a base with an outer spherical shell mounted thereon for receiving therein a ring-shaped shell holder, an intermediate spherical shell and an inner spherical shell with respective zero references at in a homologous relationship with each other. The inner spherical shell rotates within the intermediate spherical shell about X-axis. The intermediate spherical shell rotates within the ring-shaped shell holder about Y-axis. The outer spherical shell is positioned in the base to serve as the X-axis. The inner spherical shell and the intermediate spherical shell each have a pendulum at the bottom. The outer spherical shell, the ring-shaped shell holder, the inner spherical shell and the intermediate spherical shell form a gyroscopic device for three-dimensional surveying through X-axis, Y-axis and Z-axis concomitantly. The pendulum of the inner spherical shell is mounted with a compass for indicating the direction of the angle of slope being surveyed.

## Description

### BACKGROUND OF THE INVENTION

The present invention provides a three-dimensional homologous surveying instrument, which improves the disclosure of US Pat. No. 5,138,771.

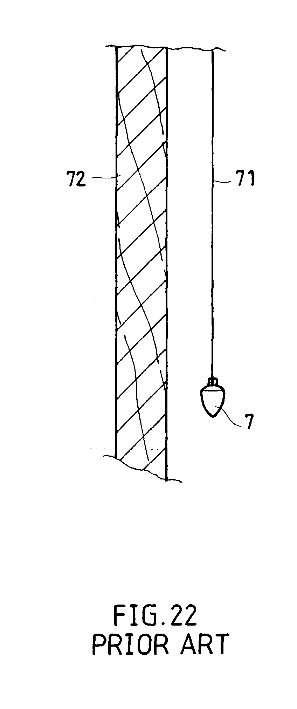

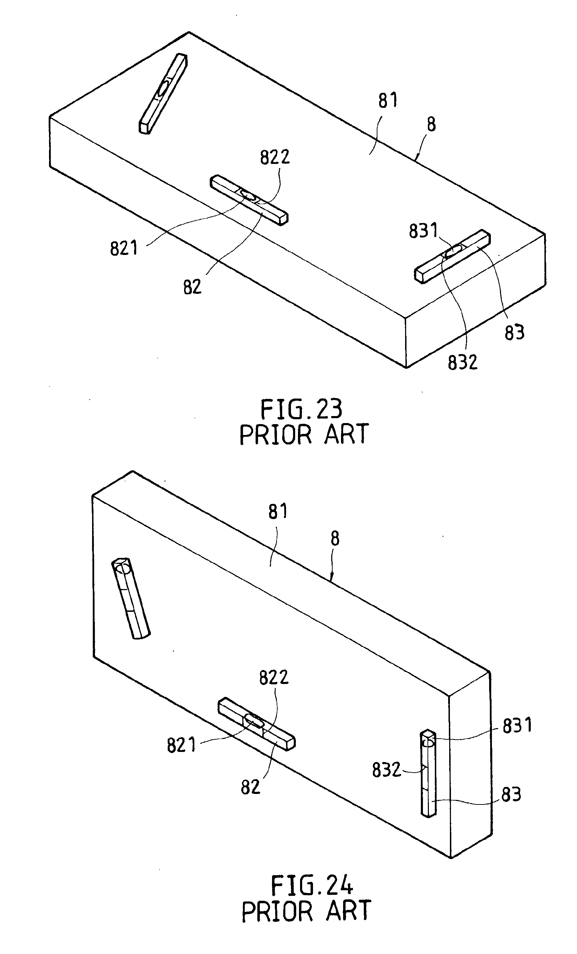

Conventionally for testing the vertical of an object **72** (see Figure 22), a pendulum **7** is suspended from a cord **71** and moved by hand, and then is released in order to determine and minimize the distance between the object **72** and the pendulum **7**. However, it takes the pendulum time to come to a stand still and when it does, the handing line hardly ever gets close enough to the target to be acceptable without repeating the measurement, making the process troublesome and resulting in reading errors as well as time wasted and imprecision. Figures 23 and 24 show a surveying instrument according to the prior art. This structure of surveying instrument **8** comprises a base **81**, and two glass tubes **82;83** positioned on the base **81** at right angles. The glass tubes **82;83** are marked with reference signs **822; 832,** and filled with liquid containing air bubbles **821;831** the air bubbles **821;831** seeking the highest point in the tubes **82;83** for horizontal surveying. However, due to the nature of liquid and low sensitivity of air bubbles, accurate precision cannot be obtained. The liquid used is easily affected by weather, which also causes enlargement of the air bubbles. The aforesaid and other known conventional surveying instruments are generally for one-dimension surveys, but they cannot indicate the angles through three-dimensional rotation.

### SUMMARY OF THE INVENTION

The present invention has been accomplished under the circumstances in view. It is one object of the present invention to provide a three-dimensional homologous surveying instrument which incorporates X-axis, Y-axis and Z-axis into an instrument, enabling scaling to be shown at an inner spherical shell, an intermediate spherical shell and an outer spherical shell for three dimensional surveying through X-axis, Y-axis and Z-axis concomitantly, so that any person who is not skilled in the art can understand the functions of the instrument and use is conveniently. It is another object of the present invention to provide a three-dimensional homologous surveying instrument, which has a base that can be conveniently attached to the object to be surveyed, enabling the angle of slope of the object to be quickly measured. It is still another object of the present invention to provide a three-dimensional homologous surveying instrument, which is connected with an electronic monitoring circuit assembly for monitoring the sloping condition of a building, construction, etc. It is still another object of the present invention to provide a three-dimensional homologous surveying instrument, which is equipped with a compass for indicating the direction of the angle of slope of an object. It is still another object of the present invention to provide a three-dimensional homologous surveying instrument which can be used for calibrating any of a variety of surveying instrument as well as for helping students learn the concept of X, Y, Z three dimensions, vertical, plane and slopes.

According to one embodiment of the present invention, the three-dimensional homologous surveying instrument is comprised of a base, an outer spherical shell mounted in the base, a ring-shaped shell holder turned about an axis within the outer spherical shell, an intermediate spherical shell turned about an axis within the ring-shaped shell holder, and an inner spherical shell turned about an axis within the intermediate spherical shell. The inner spherical shell represents the X-axis. The lower half of the inner spherical shell is a pendulum. The center of the upper half of the inner spherical shell is marked with a zero reference. The inner spherical shell is rotated on the X-axis. When the inner spherical shell stands still, the zero reference of the inner spherical shell coincides with X0° of the X-axis. The intermediate spherical shell represents the Y-axis. The lower half of the intermediate spherical shell is a pendulum. The center of the upper half of the intermediate shell is provided with a zero reference hole. The intermediate spherical shell is rotated on the Y-axis. When the intermediate spherical shell stands still, the zero reference hole of the intermediate spherical shell coincides with Y0° of the Y-axis. The inner spherical shell and the intermediate spherical shell provide two-dimensional plane factors, i.e., X0°+Y0°. The outer spherical shell represents the Z-axis. The outer spherical shell is marked with a Z-axis zero reference and scaling. Through the zero reference (Z0°) and scaling on the outer spherical shell, the zero reference hole (Y0°) and scaling on the intermediate shell and the zero reference (X0°) and scaling on the inner spherical shell, the instrument is used to survey the horizontal status or the angle of slope (X0°+Y0°+Z5°) of an object. Increasing the number of spherical shells and enabling the spherical shells to be rotated on respective axes in different directions with one receiving inside another can obtain readings on different axial tracks. The Z-axis of the outer spherical shell is on the plane of the X-axis of the inner spherical shell and the Y-axis of the intermediate spherical shell. The Z-axis can be surveyed on the X-axis through 360° as well as on the Y-axis through 360°. X0° can be calibrated on the X-axis track. Y0° can be calibrated on the Y-axis track. X0° +Y0° form a plane relative to the Z-axis of the outer spherical shell. Therefore, the dynamic X-axis, Y-axis and Z-axis form a gyroscopic device for three-dimensional surveying through X-axis, Y-axis and Z-axis concomitantly.

### BRIEF DESCRIPTION OF THE DRAWINGS

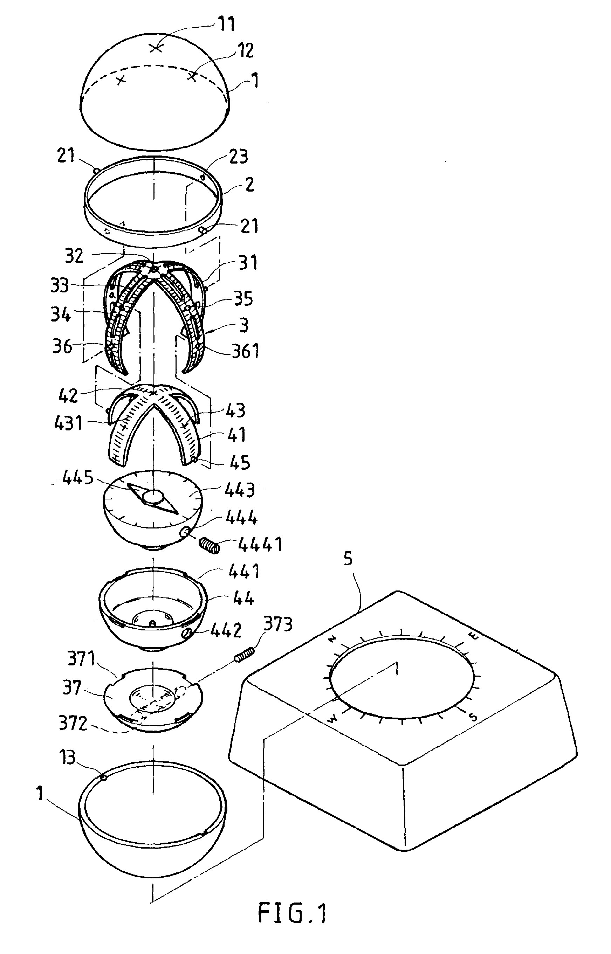

Figure 1 is an exploded view of a three-dimensional homologous surveying instrument according to a first embodiment of the present invention.

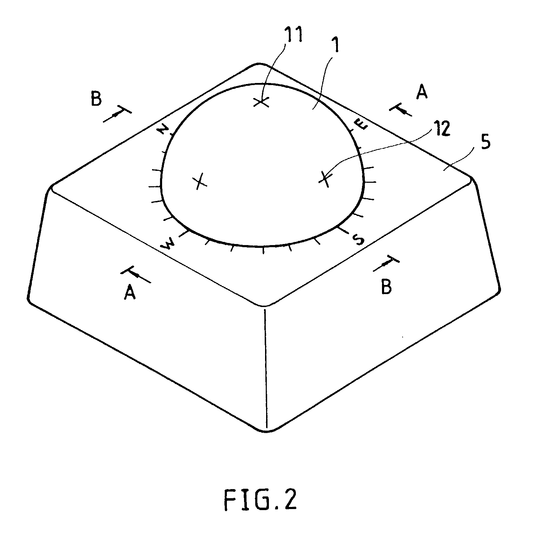

Figure 2 is a perspective view of the three-dimensional homologous surveying instrument shown in Figure 1.

Figure 3 is a sectional view taken along line A-A (X-axis) of Figure 2.

Figure 3A shows the instrument slopped at 5° angles in X-axis direction.

Figure 3B shows the relation of the scaling when at the position of Figure 3A.

Figure 4 is a sectional view taken along line B-B (Y-axis) of Figure 2.

Figure 4A shows the instrument slopped at 5° angles in Y-axis direction.

Figure 4B shows the relation of the scaling when at the position of Figure 4A.

Figure 5 shows the zero references of the outer spherical shell and inner spherical shell aligned with the zero reference hole of the intermediate spherical shell when the instrument is maintained in horizontal.

Figure 5A shows the zero reference of the inner spherical shell aligned with the zero reference hole on the intermediate spherical shell when the instrument is retained in a sloping position.

Figure 6 is a sectional view of the present invention showing the instrument retained in vertical in X-axis direction.

Figure 7 is a sectional view of the present invention showing the instrument retained in vertical in Y-axis direction.

Figure 8 shows an analog-to-digital converter connected to the instrument, a digital display and a monitor respectively connected to the analog-to-digital converter according to the present invention.

Figure 9 is a top plain view showing the indication of the compass according to the present invention.

Figure 10 is a sectional view of a three-dimensional homologous surveying instrument according to a second embodiment of the present invention.

Figure 11 is another sectional view of the second embodiment of the present invention.

Figure 12 is a sectional view of a three-dimensional homologous surveying instrument according to a third embodiment of the present invention.

Figure 13 is another sectional view of the third embodiment of the present invention.

Figure 14 is a sectional view of a three-dimensional homologous surveying instrument according to a fourth embodiment of the present invention.

Figure 15 is a sectional view of a three-dimensional homologous surveying instrument according to a fifth embodiment of the present invention.

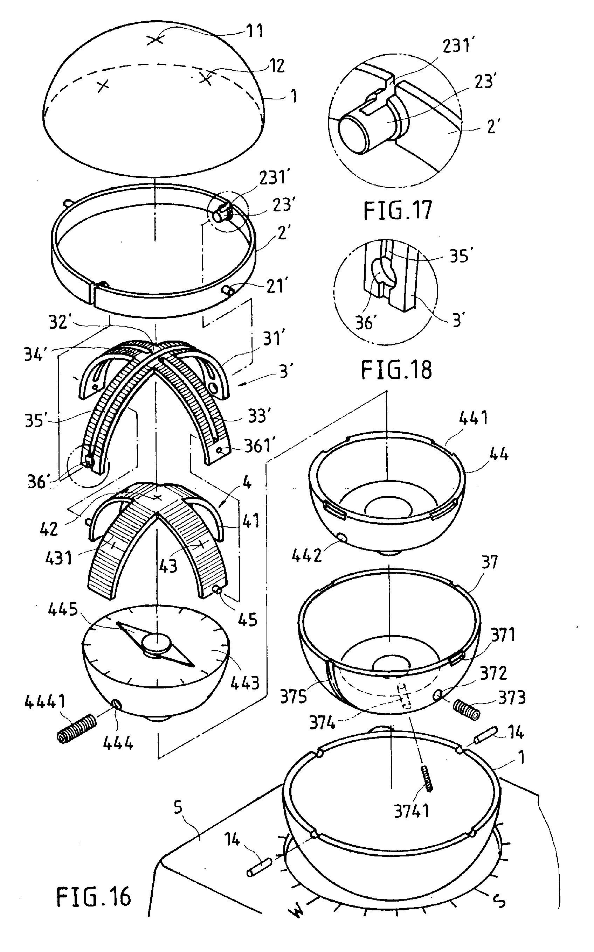

Figure 16 is an exploded view of a three-dimensional homologous surveying instrument according to a sixth embodiment of the present invention.

Figure 17 is an enlarged view of a part of Figure 16, showing the structure of the ring-shaped shell holder.

Figure 18 is an enlarged view of a part of Figure 16, showing the structure of the intermediate spherical shell.

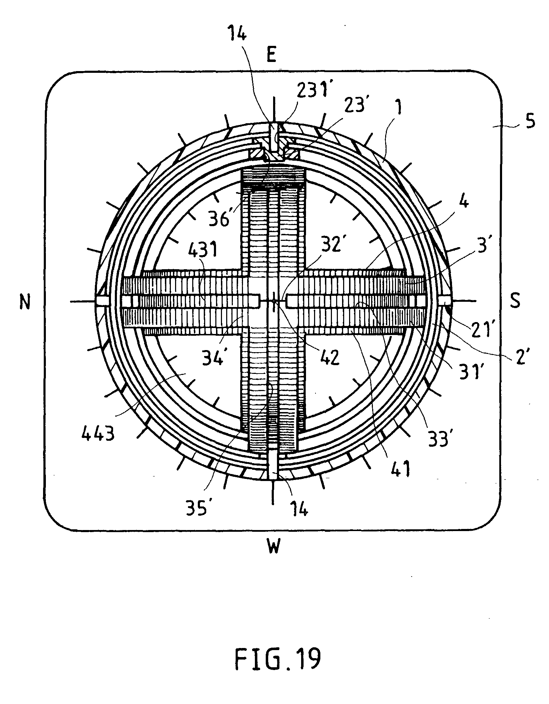

Figure 19 is a top view of the sixth embodiment of the present invention.

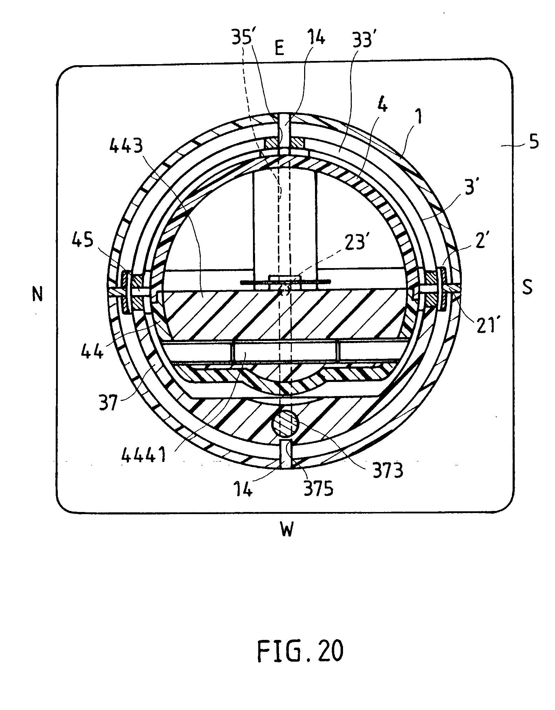

Figure 20 illustrates the instrument of the sixth embodiment of the present invention turned in EW direction through 90°.

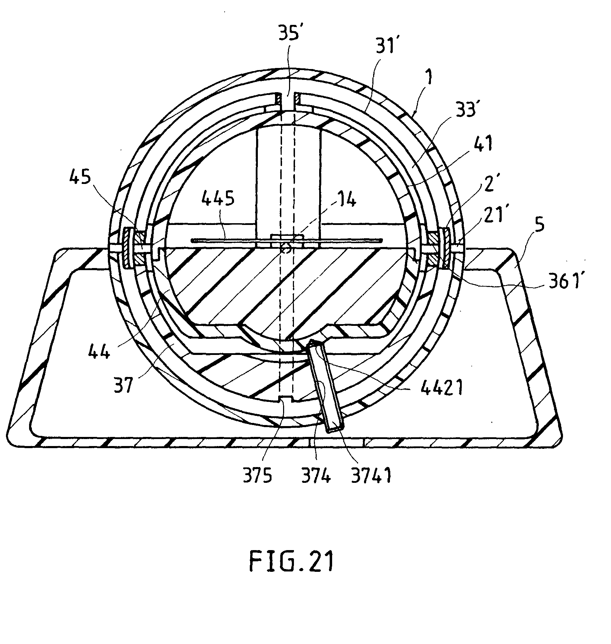

Figure 21 is a sectional view of the sixth embodiment of the present invention.

Figure 22 shows the application of a vertical surveying pendulum according to the prior art.

Figure 23 shows an air bubble tube type-surveying instrument set in a horizontal position according to the prior art.

Figure 24 shows an air bubble tube type-surveying instrument of Figure 23 set in a vertical position.

### DETAILED DESCRIPTION OF THE PREFERRED EMBODIMENT

Referring to Figures, 1, 2, 3, 4 and 9, an inner spherical shell **4** and an intermediate spherical shell **3** are positioned inside a ring-shaped shell holder **2** by positioning pins **45;36** in such a manner that the inner spherical shell **4** can be rotated about the X-axis within the intermediate spherical shell **3,** the intermediate spherical shell **3** can be rotated about the Y-axis within the ring-shaped shell holder **2**. The inner spherical shell **4** and the intermediate spherical shell **3**, like tumblers, have respective lower halves heavier than respective upper halves. The ring-shaped shell holder **2** is positioned inside an outer spherical shell **1** by positioning pins **21.** The positioning pins **21** of the ring-shaped shell holder **2** are respectively inserted in opposite pivot holes **13** on the outer spherical shell **1**. The axis, which passes through the positioning pins **21** at the ring-shaped shell holder **2**, is perpendicular to the axis, which passes through the positioning pins **36** at the intermediate spherical shell **3.** The outer spherical shell **1** is mounted on a base **5.** The intermediate spherical shell **3** has a zero reference hole **32**. The outer spherical shell 1 and the inner spherical shell **4** are marked with a respective zero reference **11;42**. Because the inner spherical shell **4** and the intermediate spherical shell **3** can be synchronously swung within the outer spherical shell 1, and are respectively rotated about the X-axis and the Y-axis, the inner spherical shell **4**, the intermediate spherical shell **3** and the outer spherical shell **1** form an instrument for surveying angles on the X-axis and the Y-axis within 360°. Further, by means of a compass **445** inside the inner spherical shell **4** and the scaling on the base **5**, the instrument can also survey a tilting angle and its direction. The inner spherical shell **4** is comprised of a top shell **41**, a hemispherical bottom shell **44**, and a pendulum **443** mounted within the hemispherical bottom shell **44**. The top shell **41** is marked with 45° angle scaling **43** and other scaling **431**. The zero reference **42** is marked at the top center of the top shell **41**. The positioning pins **45** are integral with the outside wall of the top shell **41** near the bottom at two opposite sides, and inserted into opposite pivot holes **23** on the ring-shaped shell holder **2**. The compass **445** is mounted on the flat topside wall of the pendulum **443**. The pendulum **443** is free from the effect of magnetic field. The hemispherical bottom shell **44** has a plurality of retaining notches **441** equiangularly spaced around the peripheral edge thereof for the positioning of the top shell **41**. The intermediate spherical shell **3** receives the inner spherical shell **4** on the inside, and is comprised of a bottom shell **37** and a top shell **31**. The bottom shell **37** is a pendulum, which is free from the effect of magnetic field, and has a plurality of retaining notches **371** equiangularly spaced around the peripheral edge thereof for the positioning of the top shell **35**. The top shell **31** comprises a 45°-reference hole **32**, a scaling **34**, and symmetrical peep slots **33** through which the readings on the inner spherical shell **4** are viewed. The zero reference hole **32** is provided the top center of the top shell **31**. The positioning pins **36** are integral with the outside wall of the top shell **31** near the bottom at two opposite sides. The axis, which passes through the positioning pins **36**, is perpendicular to the axis, which passes through the positioning pins **45**. When the inner spherical shell **4** is mounted within the intermediate spherical shell **3** and the intermediate spherical shell **3** is mounted within the ring-shaped shell holder **2**, the inner spherical shell **4** and the intermediately spherical shell **3** are permitted to rotate on the X-axis and the Y-axis respectively, the zero reference **42** and the zero reference hole **32** are maintained at the top. The positioning pins **21** of the ring-shaped shell holder **2** are pivotally coupled to the outer spherical shell **1** (Z-axis), permitting the ring-shaped shell holder **2** to be forced by the pendulums **443;37** to swing with the inner spherical shell **4** and the intermediate spherical shell **3** in the X-axis direction. Further, the pendulums **443;37** have a respective transverse screw hole **444** or **372**, and a respectively adjustment screw **444** or **373** threaded into the transverse screw hole **444** or **372**. The adjustment screw **4441** or **373** serves as a counterweight, and is turned in the respective transverse screw hole **444** or **372** to change the location of the center of gravity of the shell **4** or **3**, enabling the zero readings of the X-axis, the Y-axis and the Z-axis to be coincide with one another. The axis, which passes through the transverse screw hole 444 on the inner spherical shell 4, is perpendicular to the transverse screw hole **372**, which passes through the intermediate spherical shell **3**. Because the inner spherical shell **4,** the intermediate spherical shell **3** and the ring-shaped shell holder **2** are permitted to rotate on the X-axis, the Y-axis and the Z-axis respectively, the device is formed for three dimensional surveying through X-axis, Y-axis and Z-axis concomitantly.

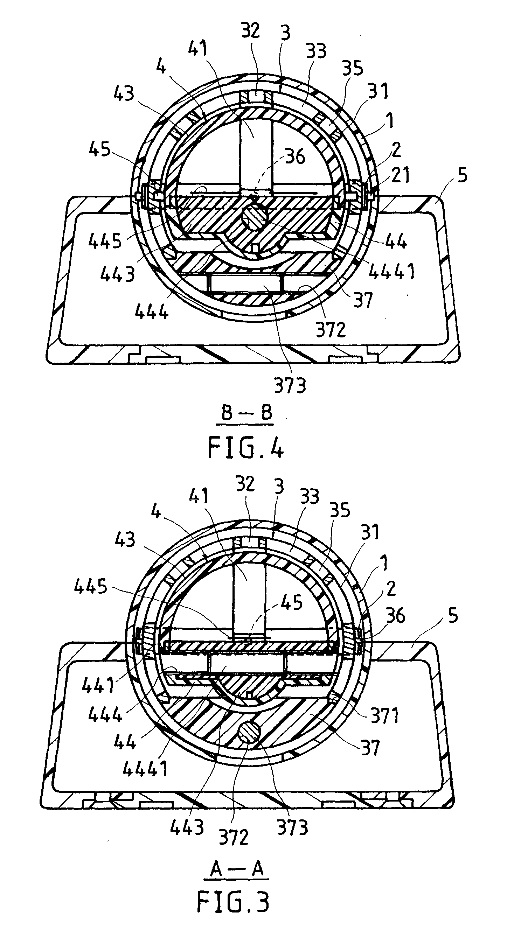

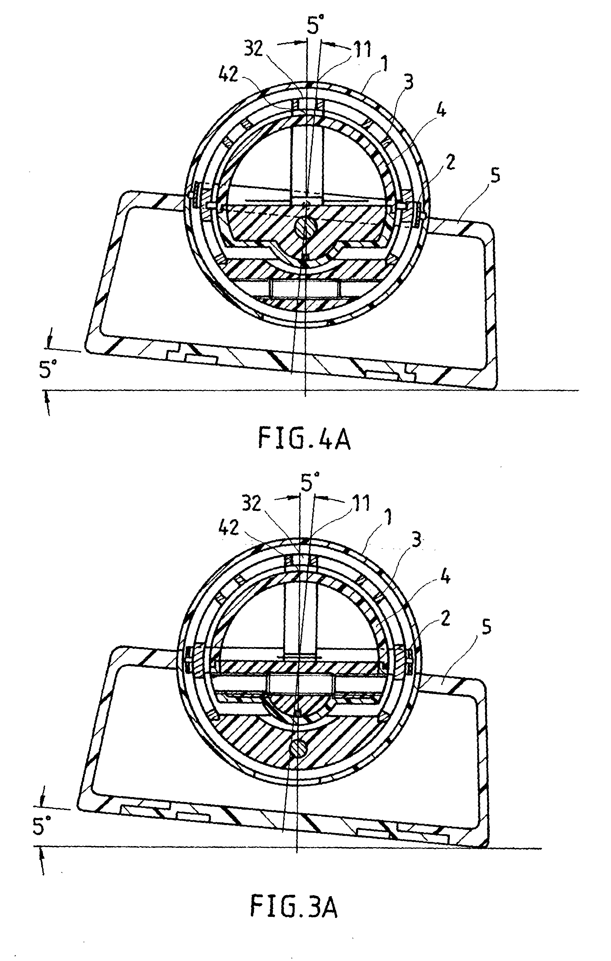

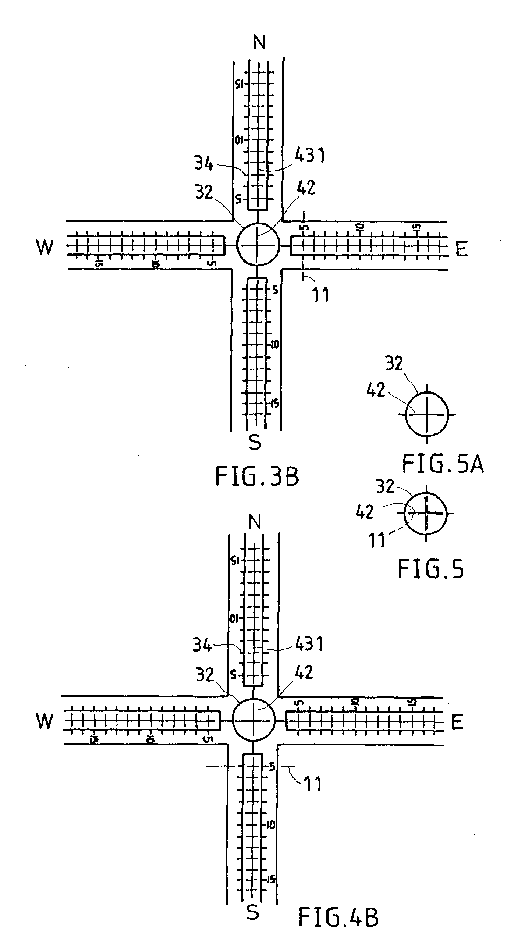

Referring to Figures 3A, 3B, 4A, 4B, 5 and 5A, when the object to be surveyed is inclined at 5° leftwards or rightwards, the zero reference **42** of the inner spherical shell **4** is aimed at the center of the zero reference hole **32** of the intermediate spherical shell 3, and the zero reference **11** of the outer spherical shell **1** is moved to 5° leftwards or rightwards from the zero reference hole **32** of the intermediate spherical shell 3 (i.e., the zero reference of Z-axis is indicated at XX axis by X0°+Y0°+Z5°, as shown in Figure 3B). When the object to be surveyed is inclined 5° 2 forwards or backwards, the zero reference **42** of the inner spherical shell **4** is aimed at the center of the zero reference hole **32** of the intermediate spherical shell **3**, and the zero reference **11** of the outer spherical shell **1** is moved to 5° above or below the zero reference hole **32** of the intermediate spherical shell **3** (i.e., the zero reference of Z-axis is indicated at YY axis by X0°+Y0°+Z5°, as shown in Figure 3B; see Figure 4B). As indicated in Figures 3B and 4B, the zero reference **42** and scaling **431** of X-axis are moved with the inner spherical shell, and can be viewed through the zero reference hole **32** and peep slots **33,** enabling the position of Z-axis to be easily read out. If the object to be surveyed is not maintained in horizontal, the zero reference **42** is aimed at the center of the zero reference hole **32**, but biased from the zero reference **11** of the outer spherical shell 1 (i.e., X0°+Y0°, as shown in Figure 5A). When the object is maintained in horizontal, the zero reference **42** of the inner spherical shell **4** is aimed at the center of the zero reference hole **32** on the intermediate spherical shell **3**, and the zero reference **11** of the outer spherical shell 1 is in alignment with the zero reference hole **32** on the intermediate spherical shell **3** and the zero reference **42** of the inner spherical shell **4** (i.e., X0°+Y0°+Z0°, as shown in Figure 5).

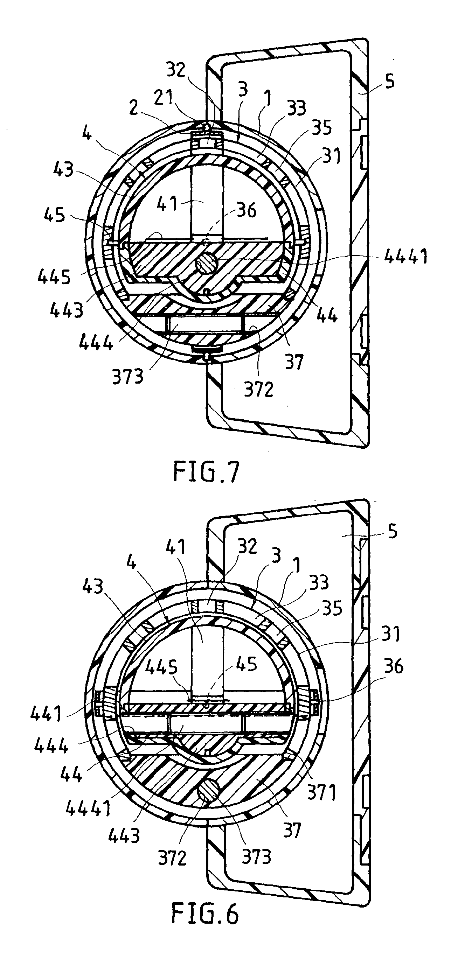

Referring to Figures 6 and 7, if the object to be surveyed is maintained in a vertical position in X-axis direction, the zero reference **42** of the inner spherical shell **4** is aimed at the center of the zero reference hole **32** on the intermediate spherical shell **3**, the zero reference **11** of the outer spherical shell **1** is moved to 90° leftwards or rightwards from the zero reference hole **32** on the intermediate spherical shell **3** (see Figure 6). If the object to be surveyed is maintained in a vertical position in Y-axis direction, the zero reference **42** of the inner spherical shell **4** is aimed at the center of the zero reference hole **32** on the intermediate spherical shell **3**, the zero reference **11** of the outer spherical shell **1** is moved to 90° forwards or backwards from the zero reference hole **32** on the intermediate spherical shell **3** (see Figure 7).

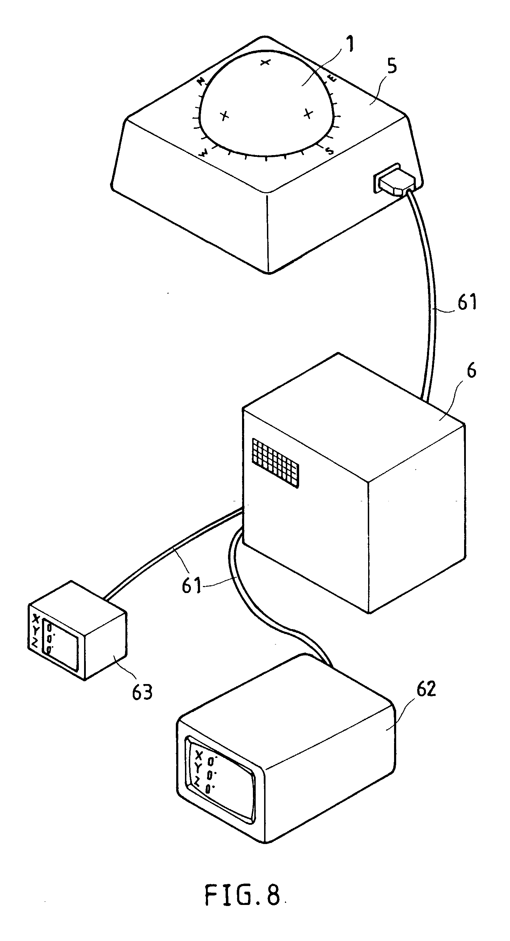

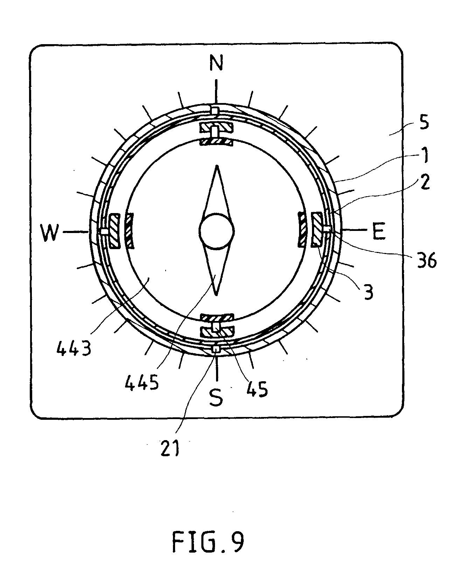

Referring to Figures 8 and 9, detectors (not shown) may be installed in the surveying instrument to detect the angles of rotation of the positioning pins **21;36;45** respectively. Detected analog data from the detectors are converted into respective digital data by an analog-to-digital converter **6**, and then shown through a digital display **63** or a monitor **62**. Signal lines **61** are provided to connect the digital display **63**, the monitor **62**, the analog-to-digital converter **6** and the detectors together.

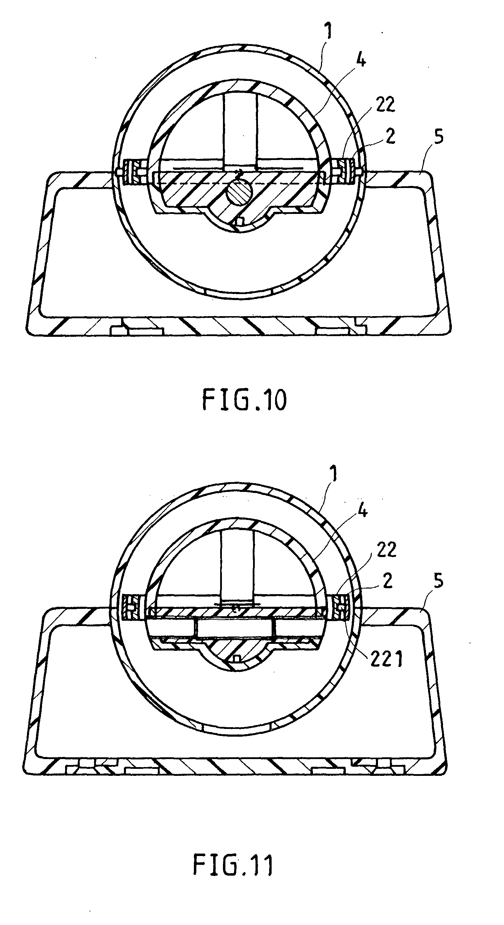

Figures 10 and 11 show a second embodiment of the 3-D homologous surveying instrument of the present invention. According to this embodiment, the aforesaid intermediate spherical shell **3** is placed by a second ring-shaped shell holder **22.** The second ring-shaped shell holder **22** is pivotally mounted within the ring-shaped shell holder 22 by positioning pins **221,** and rotated on the Y-axis.

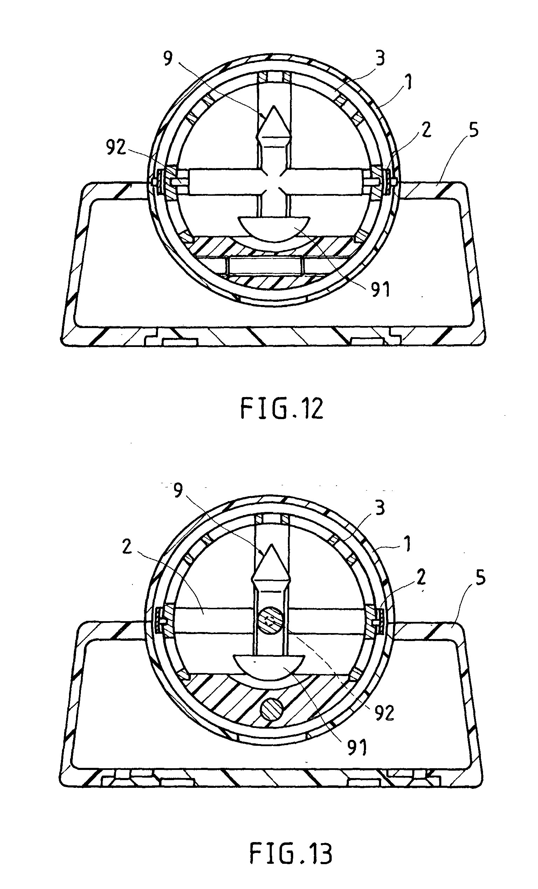

Figures 12 and 13 show a 3-D homologous surveying instrument according to a third embodiment of the present invention. According to this embodiment, the aforesaid inner spherical shell **4** is replaced by an index **9**. The index **9** is pivotally mounted within the intermediate spherical shell **3** by positioning pins **92** and turned about the X-axis, having one end integral with a pendulum **91**. Therefore, through the outer spherical shell **1** (Z-axis), the intermediate spherical shell **3** (Y-axis) and the index **9** (X-axis), it can be immediately judged if an object is at a horizontal or inclined status.

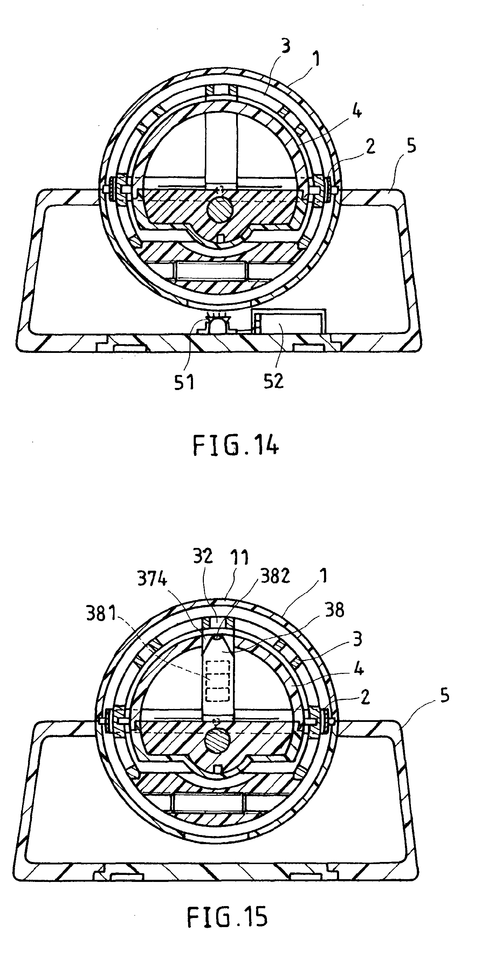

Figure 14 shows a fourth embodiment of the 3-D homologous surveying instrument of the present invention. According to this embodiment, a light source **51** and a battery cell **52** are mounted inside the base **5** below the outer spherical shell **1;** the outer spherical shell **1**, the intermediate spherical shell **2** and the inner spherical shell **4** are transparent. The battery cell **52** provides the necessary working voltage to the light source **51**. The light source **51** emits light through the shells **1;2;4**, enabling the user to view the readings of the instrument at night.

Figure 15 shows a fifth embodiment of the 3-D homologous surveying instrument of the present invention. According to this embodiment, a battery **381** and a laser beam generating module **38** are connected together and mounted in the inner spherical shell. The laser beam-generating module **38** has a laser-firing hole **382** retained in coincidence with the top center hole **374** of the inner spherical shell **4**. The laser beam-generating module **38** emits a laser beam through the laser-firing hole **382** for X-axis zero reference.

Figures from 16 through 21 show a 3-D homologous surveying instrument according to a sixth embodiment of the present invention. In order to let the zero reference **11** achieve reading, a set of pins **14** are installed in the base **5** and respectively engaged into a guide groove **35'** on the top shell **31'** of the X-axis intermediate spherical shell **3'**, enabling X-axis and Y-axis to be rotated along the guide grooves **35'** so as to provide a XY plane reading when kept still. The ring-shaped shell holder **2'** comprises two bearings **23'** bilaterally disposed on the inside and aligned in X-X direction. The bearings **23'** each comprise a locating groove **231'**. The intermediate spherical shell **3'** is rotatably positioned inside the ring-shaped shell holder **2'**. The bottom shell **37** of the intermediate spherical shell **3'** is a pendulum free from the effect of the magnetic field. The top shell **31'** comprises two locating holes **36'** through which the bearings **23'** are inserted for enabling the intermediate spherical shell **3'** to be rotated on X-axis. A X-X guide groove **375** is made on the peripheral wall of the bottom shell **37** of the intermediate spherical shell **3'** corresponding to the top shell **31'**. The guide groove **35'** on the top shell **31'** of the intermediate spherical shell **3'**, the guide groove **375** on the bottom shell **37** of the intermediate spherical shell **3'** and the locating groove **231'** on each bearing **23'** at the intermediate spherical shell **2'** form a X-X guide track around the periphery of the intermediate spherical shell **3'**. The pins **14** are installed in the outer shell **1** at the base **5**, and inserted into the guide track formed of the guide grooves **35', 372** and **231'**. When the base **5** is tilted, the intermediate spherical shell **3'** and the inner spherical shell **4** are rotated in X-X direction about Y-axis along the guide track formed of the guide grooves **35', 372** and **231'**, so as to provide a XY plane reading. Further, the screw **3741** is threaded into a bottom screw hole **374** on the bottom shell **37** and engaged into a locating blind hole **442** on the hemispherical bottom shell **44** of the inner spherical shell **4** to stop the intermediate spherical shell **3'** and the inner spherical shell **4** from rotary motion relative to each other when the three-dimensional homologous surveying instrument is not in use.

As indicated above, the present invention provides a 3-D homologous surveying instrument, which enables the user to rapidly accurately survey the horizontal or inclined status of an object. According to the present invention, the instrument forms a gyroscopic device for three-dimensional surveying through X-axis, Y-axis and Z-axis concomitantly.

## Claims

1. A three-dimensional homologous surveying method comprising the steps of:
a) preparing an inner spherical shell having a heavier lower half and a lighter upper half, an intermediate spherical shell having a heavier lower half and a lighter upper half, a ring-shaped shell holder, and a transparent outer spherical shell;
b) making a zero reference at the center of an upper half of said outer spherical shell, a zero reference hole at the center of the upper half of said intermediate spherical shell, a zero reference at the center of the upper half of said inner spherical shell, and scaling on said inner spherical shell, said intermediate spherical shell and said outer spherical shell;
c) fixedly mounting a compass on the lower half of said inner spherical shell; and
d) positioning said inner spherical shell to rotate within said intermediate spherical shell about X-axis, positioning said intermediate spherical shell to rotate within said ring-shaped shell holder about Y-axis, and positioning said ring-shaped shell holder to rotate within said outer spherical shell about Z-axis, enabling inner spherical shell, said intermediate spherical shell, said ring-shaped shell holder and said outer spherical shell to form a gyroscopic device for three dimensional surveying through X-axis, Y-axis and Z-axis concomitantly, and enabling said compass to indicate the direction of angle surveyed.

2. A three-dimensional homologous surveying instrument comprising:
an inner spherical shell, said inner spherical shell comprising a top shell, a hemispherical bottom shell, and a pendulum free from the effect of magnetic field and mounted within the hemispherical bottom shell, the top shell of said inner spherical shell being marked with a zero reference at the center thereof and scaling, the top shell of said inner spherical shell comprising two positioning pins raised from the periphery at two opposite sides adjacent to the hemispherical bottom shell, the pendulum of said inner spherical shell comprising a flat top side wall, a compass mounted in said flat top side wall, a transverse through hole, a counterweight adjustment screw threaded into said transverse through hole and turned to change the location of the center of gravity of the pendulum of said inner spherical shell and to adjust zero reading of the X-axis;
an intermediate spherical shell which receives said inner spherical shell, said intermediate spherical shell comprised of a bottom shell and a top shell, the bottom shell of said intermediate spherical shell being a pendulum free from the effect of magnetic field and having a transverse screw hole and a counterweight adjustment screw threaded into the transverse screw hole and turned to change the location of the center of gravity of the bottom shell of said intermediate spherical shell and to adjust zero reading of the Y-axis, the top shell of said intermediate spherical shell comprising a zero reference hole at the center thereof, scaling, symmetrical peep slots through which the scaling on said inner spherical shell being viewed, two positioning pins raised from the peripheral at two opposite sides adjacent to the bottom shell of said intermediate spherical shell, and two pivot holes at two opposite sides adjacent to the bottom shell of said intermediate spherical shell which receive the positioning pins of said inner spherical shell, the axis which passes through the pivot holes on said intermediate spherical shell being perpendicular to the axis which passes through the positioning pins of said intermediate spherical shell;
a ring-shaped shell holder mounted around said intermediate spherical shell, said ring-shaped shell holder having two opposite positioning pins, and two opposite pivot holes which receive the positioning pins of said intermediate spherical shell, the axis which passes through the pivot holes on said ring-shaped shell holder being perpendicular to the axis which passes through the positioning pins of said ring-shaped shell holder;
an outer shell formed of an upper hemispherical shell and a lower hemispherical shell fastened together and fixedly mounted in the circular center hole on said base, said outer shell having a Z-axis zero reference at the center of the upper hemispherical shell thereof, crossed scaling on the upper hemispherical shell thereof, and two opposite pivot holes at the connecting area between the upper hemispherical shell and lower hemispherical shell of said cover shell which receive the positioning pins of said ring-shaped shell holder; and
a hollow base covered with a bottom cover, said base having a circular center hole at topside thereof.

3. The three-dimensional homologous surveying instrument of claim 2 further comprising a plurality of detectors respectively installed in the positioning pins of said ring-shaped shell holder, the positioning pins of said intermediate spherical shell and the positioning pins of said inner spherical shell to detect angular displacement of the X-axis, Y-axis and Z-axis, an analog-to-digital converter which converts detected data from said detectors into corresponding digital data, and display means which shows digital data outputted from said analog-to-digital converter.

4. The three-dimensional homologous surveying instrument of claim 2 wherein said outer shell is transparent; said inner spherical shell and said intermediate spherical shell and said ring-shaped shell holder are colored with different colors and made of metal which is free from the effect of magnetic field.

5. A three-dimensional homologous surveying instrument comprising:
an inner spherical shell, said inner spherical shell comprising a top shell, a hemispherical bottom shell, and a pendulum free from the effect of magnetic field and mounted within the hemispherical bottom shell, the top shell of said inner spherical shell being marked with a zero reference at the center thereof and scaling, the top shell of said inner spherical shell comprising two positioning pins raised from the periphery at two opposite sides adjacent to the hemispherical bottom shell, the pendulum of said inner spherical shell comprising a flat top side wall, a compass mounted in said flat top side wall, a transverse through hole, a counterweight adjustment screw threaded into said transverse through hole and turned to change the location of the center of gravity of the pendulum of said inner spherical shell and to adjust zero reading of the X-axis;
a first ring-shaped shell holder mounted around said inner spherical shell, said ring-shaped shell holder having two opposite positioning pins, and two opposite pivot holes, the axis which passes through the pivot holes on said ring-shaped shell holder being perpendicular to the axis which passes through the positioning pins of said ring-shaped shell holder;
a second ring-shaped shell holder mounted around said inner spherical shell within said first ring-shaped shell holder, said second ring-shaped shell holder having two opposite pivot holes which receive the positioning pins of said inner spherical shell, and two opposite positioning pins which are respectively inserted into the pivot holes on said first ring-shaped shell holder, the axis which passes through the pivot holes on said second ring-shaped shell holder being perpendicular to the axis which passes through the positioning pins of said second ring-shaped shell holder;
an outer shell formed of an upper hemispherical shell and a lower hemispherical shell fastened together and fixedly mounted in the circular center hole on said base, said outer shell having a Z-axis zero reference at the center of the upper hemispherical shell thereof, crossed scaling on the upper hemispherical shell thereof, and two opposite pivot holes at the connecting area between the upper hemispherical shell and lower hemispherical shell of said cover shell which receive the positioning pins of said ring-shaped shell holder; and
a hollow base covered with a bottom cover, said base having a circular center hole at topside thereof.

6. A three-dimensional homologous surveying instrument comprising:
a pendulum index turned about the X-axis, said pendulum index comprising two positioning pins raised from two opposite sides thereof on the middles and a bottom end integral with a pendulum
an intermediate spherical shell mounted around said pendulum index, said intermediate spherical shell comprised of a bottom shell and a top shell, the bottom shell of said intermediate spherical shell being a pendulum free from the effect of magnetic field and having a transverse screw hole and a counterweight adjustment screw threaded into the transverse screw hole and turned to change the location of the center of gravity of the bottom shell of said intermediate spherical shell and to adjust zero reading of the Y-axis, the top shell of said intermediate spherical shell comprising a zero reference hole at the center thereof, scaling, symmetrical peep slots through which the scaling on said inner spherical shell being viewed, two positioning pins raised from the peripheral at two opposite sides adjacent to the bottom shell of said intermediate spherical shell, and two pivot holes at two opposite sides adjacent to the bottom shell of said intermediate spherical shell which receive the positioning pins of said pendulum index, the axis which passes through the pivot holes on said intermediate spherical shell being perpendicular to the axis which passes through the positioning pins of said intermediate spherical shell;
a ring-shaped shell holder mounted around said intermediate spherical shell, said ring-shaped shell holder having two opposite positioning pins, and two opposite pivot holes which receive the positioning pins of said intermediate spherical shell, the axis which passes through the pivot holes on said ring-shaped shell holder being perpendicular to the axis which passes through the positioning pins of said ring-shaped shell holder;
an outer shell formed of an upper hemispherical shell and a lower hemispherical shell fastened together and fixedly mounted in the circular center hole on said base, said outer shell having a Z-axis zero reference at the center of the upper hemispherical shell thereof, crossed scaling on the upper hemispherical shell thereof, and two opposite pivot holes at the connecting area between the upper hemispherical shell and lower hemispherical shell of said cover shell which receive the positioning pins of said ring-shaped shell holder; and
a hollow base covered with a bottom cover, said base having a circular center hole at topside thereof.

7. The three-dimensional homologous surveying instrument of claim 2 wherein said outer spherical shell, said intermediate spherical shell and said inner spherical shell are transparent; said base comprises a light source and a battery cell electrically connected together and set below said outer spherical shell and controlled to emit light through said outer spherical shell, said intermediate spherical shell and said inner spherical shell.

8. The three-dimensional homologous surveying instrument of claim 1 wherein a battery and a laser beam generating module are electrically connected together and mounted in said inner spherical shell and controlled to emit a laser beam for X-axis zero reference, said laser beam generating module having a laser firing hole retained in coincidence with a hole at the zero reference of said inner spherical shell.

9. The three-dimensional homologous surveying instrument of claim 1 which can be achieved by any conventional mechanical arrangement to position an X-axis, a Y-axis and a Z-axis, enabling the zero reference of the X-axis and the zero reference of the Y-axis to be coincide with each other to form a plane and the zero reference of the Z-axis to be moved on the plane such that an angle of slope of X°+Y0°+Z5° can be checked through the X-axis.

10. The three-dimensional homologous surveying instrument of claim 2 wherein the zero reference and scaling of said inner spherical shell represent X0° of the X-axis, the zero reference hole and scaling of said intermediate spherical shell represent Y0° of the Y-axis, said inner spherical shell and said intermediate spherical shell being respectively rotated on different axes and concomitantly providing X0°+Y0° plane factors when stand still, enabling the horizontal of X°+Y0°+Z0° and an angle of slope of X°+Y0°+Z5° to be checked through said outer spherical shell (Z-axis).

11. The three-dimensional homologous surveying instrument of claim 2 wherein the zero reference of said outer spherical shell (Z-axis) is on the plane of X°+Y0° obtained from said inner spherical shell and said intermediate spherical shell for a three dimensional surveying through X-axis, Y-axis and Z-axis concomitantly, and the zero reference of said inner spherical shell and the zero reference hole of said intermediate spherical shell being calibrated by rotating the respective counterweight adjustment screws in the respective transverse screw holes.

12. The three-dimensional homologous surveying instrument of claim 1 wherein the method of positioning said inner spherical shell, said intermediate spherical shell, said ring-shaped shell holder and said outer spherical shell is employed to keep a compass constantly in horizontal.

13. The three-dimensional homologous surveying instrument of claim 2 wherein the zero reference of the Z-axis of said base is made to provide a XY plane reading by means of providing an guide track on said intermediate spherical shell, and installing a set of locating pins in said base for enabling the locating pins to be inserted into said guide track to let X-axis and Y-axis be rotated together along said guide track.

14. The three-dimensional homologous surveying instrument of claim 13 wherein said ring-shaped shell holder comprises two bearings bilaterally disposed on the inside and aligned in X-X direction, said bearings each having a locating groove; said intermediate spherical shell comprising two locating holes through which said bearings are inserted for enabling said intermediate spherical shell to be rotated on X-axis, and a X-X guide groove extended through the periphery thereof and forming with the locating groove on each of said bearings at said intermediate spherical shell a X-X guide track, which receives the pins at said base for enabling said intermediate spherical shell and said inner spherical shell to be rotated in X-X direction, so as to provide a XY plane reading.

15. The three-dimensional homologous surveying instrument of claim 14 said base comprises a screw for threading into a screw hole on said intermediate spherical shell into a locating blind hole on said inner spherical shell to stop said intermediate spherical shell and said inner spherical shell from rotary motion relative to each other when the three-dimensional homologous surveying instrument is not in use.
